# EUROPEAN PATENT APPLICATION

(11) **EP 4 761 242 A1**
(43) Date of publication of application: **17.06.2026**
(21) Application number: 24315580.1
(22) Date of filing: 16.12.2024
(51) Int. Cl.: H04N 19/597, H04N 13/128, H04N 13/178, H04N 21/81, H04N 21/854

(54) **METHOD AND APPARATUS FOR ENCAPSULATING DEPTH DATA FOR A PLURALITY OF DEPTH SUBRANGES**

(71) Applicant: Beijing Xiaomi Mobile Software Co., Ltd., Beijing Beijing 100085 (CN)
(72) Inventor: Potetsianakis, Emmanouil, Beijing, 100085 (CN); Thomas, Emmanuel, Beijing, 100085 (CN); Alexiou, Evangelos, Beijing, 100085 (CN)
(74) Representative: Zimmermann, Tankred Klaus

(57) **Abstract**

A method of processing depth data of an image splits a depth range of the depth data into a plurality of depth subranges, and encapsulates the depth data of each of the plurality of depth subranges in separate data structures of a data container.

## Description

### Technical Field

The present disclosure relates to the field of providing depth information for an image or for a scene, like a scene depicted in a picture, an image or a video, and embodiments of the present disclosure concern improvements regarding a transmission of depth data representing respective depth values indicating distances in the image or scene relative to a certain point or to a certain plane. More specific embodiments of the present disclosure relate to encapsulating depth data of each of the plurality of depth subranges in separate data structures of a data container.

### Background

Conventionally, depth data of an image or of a scene is provided for the whole of full range of depth, i.e., from a minimum distance to a maximum distance. As such, depth data must be stored with an adequate bit depth to represent any value within the full range. However, only depth data from a limited range might be required for specific applications.

Thus, there is a need to provide improvements for handling depth data of an image to enable more granular access to depth range values and more efficient usage of the available bit depth.

### Summary

The present disclosure provides a method of processing depth data of an image, the method comprising:
splitting a depth range of the depth data into a plurality of depth subranges, and
encapsulating the depth data of each of the plurality of depth subranges in separate data structures of a data container.

Optionally,
the depth data of the depth range is encapsulated in a first data container, and the depth data of the plurality of depth subranges is encapsulated in a second data container, the first and second data containers being separate data containers, or
the depth data of the depth range is encapsulated in a first data structure of the data container, and the depth data of the plurality of depth subranges is encapsulated in respective second data structures of the data container, wherein the first and second data structures are separate data structures of the data container.

Optionally,
the depth data of the depth range is encapsulated in the first data structure of the data container by including into the first data structure
   - depth values for the depth range, or
   - a reference to depth values in the second data structures,
   or
the depth data of the depth range is encapsulated in the first data structure of the data container by sequentially including into the first data structure depth values for the depth range, and the depth data of a depth subrange is encapsulated in the second data structure of the data container by including into the second data structure
   - depth values for the depth subrange, or
   - a reference to depth values in the first data structure.

Optionally, the second data structures are associated with the first data structure using
- a group identifier, wherein the a group identifier identifies a group to which the first and second data structures belong to, or
- a reference to the first data structure.

Optionally, the method further comprises:
writing information about the first and/or second data structures in
   - the data container, e.g., into a header of the data container or into a header of the first and/or second data structures of the data container, or into respective third data structures which are associated with the first and/or second data structures, or
   - a file which is separate from the data container, e.g., into a configuration file associated with the data container, and
wherein the information about the first and/or second data structures comprises one or more of the following:
   - information about the data structure being a first data structure or a second data structure,
   - information about an association of the second data structures with the first data structure, e.g., the group identifier or the reference to the first data structure,
   - information about a group including the depth data of the depth range and the plurality of depth subranges and about the first and second data structures associated with the group.

Optionally,
the plurality of depth subranges comprises two or more of partially overlapping depth subranges, and/or
boundaries of one or more or all of the plurality of depth subranges change over time.

Optionally,
the data container is separated in a plurality of segments or parts for delivery over the network using, e.g., a Common Media Application Format, CMAF, or Dynamic Adaptive Streaming over HTTP, DASH, or
the data container is packetized for delivery over the network using a network packetized stream. e.g. a Real-Time Transport Protocol, RTP, stream.

Optionally, the method comprises:
- receiving the depth data,
- creating the data container,
- separating the depth range of the depth data into the depth subranges,
- splitting the depth data into the respective depth subranges,
- encapsulating the depth data by writing the depth data for each depth subrange into the data container, wherein the depth data is written into the data container in a timed structure, e.g., in the form of one track per depth subrange according to the ISO Base Media File Format, ISOBMFF, and
- writing metadata on the depth data and a description of the ranges in the data container, wherein timed metadata is written into a timed structure, e.g., a metadata track in accordance with the ISO Base Media File Format, ISOBMFF, and wherein untimed metadata is written into a non-timed structure, e.g. data container header, like a track or file header.

Optionally, the data container is a file according to the ISO Base Media File Format, ISOBMFF, and wherein the data structures are respective tracks of the file.

The present disclosure provides a method of processing depth data of an image, the method comprising:
retrieving the depth data from a data container, wherein the data container encapsulates depth data of each of a plurality of depth subranges in separate data structures of the data container, and wherein the depth data of the plurality of depth subranges comprises the depth data of the image.

Optionally, retrieving the depth data from the data container comprises:
- receiving the data container, e.g., a file according to the ISO Base Media File Format, ISOBMFF,
- parsing data encapsulated in the data container,
- extracting metadata from the data encapsulated in the data container,
- using the extracted metadata for identifying a location containing relevant depth subranges, and
- extracting the depth data for the identified depth subranges.

The present disclosure provides a non-transitory computer-readable storage medium comprising instructions which, when executed by a computer, cause the computer to carry out the method of any one of the preceding claims.

The present disclosure provides an apparatus of processing depth data of an image, the apparatus comprising:
a data processing module for
- splitting a depth range of the depth data into a plurality of depth subranges, and encapsulating the depth data of each of the plurality of depth subranges in separate data structures of the data container, or
- retrieving the depth data from the data container, wherein the data container encapsulates depth data of each of a plurality of depth subranges in separate data structures of the data container.

The present disclosure provides a data container encapsulating depth data of an image, wherein depth data of each of a plurality of depth subranges is encapsulated in separate data structures of the data container.

The present disclosure provides a data stream having encoded thereinto data on an image, wherein the data stream comprises:
a data container encapsulating depth data of the image, wherein depth data of each of a plurality of depth subranges is encapsulated in separate data structures of the data container.

The technical solutions provided according to embodiments of the present disclosure have the following beneficial effects.

Conventional approaches for handling depth data for a depth range of an image or of a scene (also referred herein as the full depth range) have several shortcomings, e.g.: (1) The depth data (video and images) encoding bit depth is limited by a maximum bit depth of the format and/or hardware, e.g. a 10bit depth image cannot fit into an 8bit encoder without data loss. (2) The depth data can be accessed only in the time domain, i.e., at a point on a timeline, but not in the space domain, i.e., not at a specific distance. (3) A spatial segmentation of the depth data is based on the 2D visual domain, i.e., it can be split with dimensions in horizontal and vertical axes only, even though there is a third dimension, i.e., the depth. (4) The whole of full range of depth, i.e., from a minimum distance to a maximum distance, is transmitted at any given time.

Embodiments of the present disclosure addresses the above drawbacks or shortcomings by providing an approach which splits a depth range of the depth data into a plurality of depth subranges, and encapsulates the depth data of each of the plurality of depth subranges in separate data structures of a data container. Thus, embodiments of the present disclosure address the problem how to allow consuming a source depth content encoded with a bit depth that is higher than supported bit depth. For example, a device, like a hardware coder, or a process, like software running on a certain device or processor, e.g., a software decoder, may be enabled to consume a source depth content encoded with a bit depth that is higher than the bit depth supported by the device or process. This is achieved by defining the slices from the source depth content with each slice containing the data from the source depth content that belongs to a sub range corresponding to a distance interval in the source content. When compared to conventional approaches, embodiments of the present disclosure offer the following benefits:
- An access of depth data only in depth range of interest is enabled.
- A high bit depth data may be decoded by lower bit depth decoders, i.e., a decoder of the bit depth of the individual depth ranges is sufficient.
- In case of receiving raw depth data to be encoded, the encoding quality is improved since intra prediction algorithms will only consider the regions of a frame where data is present

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: illustrates an example of a depth value representation;
- Fig. 2(A)-2(B): illustrate examples of a depth image and a color image;
- Fig. 3(A)-3(B): illustrate passive and active stereo vision methods to generate depth images;
- Fig. 4(A)-4(B): illustrate structured light and time-of-flight methods to generate depth images;
- Fig. 5: illustrates an example of a conventional ISOBMFF file structure including video data and associated depth data;
- Fig. 6: illustrates another example of a conventional ISOBMFF file structure including video data and associated depth data;
- Fig. 7: illustrates yet another example of a conventional ISOBMFF file structure including video data and associated depth data;
- Fig. 9(A)-9(B): illustrate a flow diagram of an embodiment of a method of processing depth data of an image (encapsulation of the depth data) in accordance with embodiments of the present disclosure;
- Fig. 10: illustrates a splitting of an original full-range depth frame into three subrange depth frames or slices in accordance with embodiments of the present disclosure;
- Fig. 11: illustrates the encapsulation of depth data into a data container in accordance with an embodiment of the present disclosure;
- Fig. 12: illustrates the encapsulation of depth data into a data container in accordance with a further embodiment of the present disclosure.
- Fig. 13: illustrates the encapsulation of depth data into a data container in accordance with another embodiment of the present disclosure.
- Fig. 14: illustrates the encapsulation of depth data into a data container in accordance with yet another embodiment of the present disclosure.
- Fig. 15: illustrates a splitting of an original full-range depth frame into two partially overlapping sub-range depth frames or slices in accordance with embodiments of the present disclosure;
- Fig. 16: illustrates a flow diagram of a further embodiment of a method of processing depth data of an image (retrieval of the depth data) in accordance with embodiments of the present disclosure;
- Fig. 17: illustrates a flow diagram of a method of retrieving depth data from a data container in accordance with embodiments of the present disclosure;
- Fig. 18: illustrates a block diagram of an apparatus of processing depth data of an image (encapsulation of the depth data) in accordance with embodiments of the present disclosure;
- Fig. 19: illustrates a block diagram of an apparatus of processing depth data of an image (retrieval of the depth data) in accordance with further embodiments of the present disclosure;
- Fig. 20: illustrates a data stream in accordance with embodiments of the present disclosure; and
- Fig. 21: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of..or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the term "image" or "image representation" may refer to a 2D array of samples, with each sample containing a value, associated with a color space for visualization.

In the present disclosure, the term "depth camera center" may refer to a default origin point used as reference for capturing a depth image, if applicable.

In the present disclosure, the term "depth camera plane" may refer to a default origin plane used as reference for capturing a depth image, if applicable.

In the present disclosure, the term "depth image" may refer to an image with each sample of the image being associated with a value representing a distance relative to a depth camera, i.e., a depth camera center or a depth camera plane.

In the present disclosure, the term "depth map" may refer to a depth image that is associated with another image according to a known spatio-temporal relationship.

In the present disclosure, the term "RGB image" may refer to an image representation of color data; each sample is associated with a color (RGB, YUV, or other) value.

In the present disclosure, the term "RGBD image" may refer to an image representation of spatio-temporally aligned RGBD data; each sample is associated with a color (RGB) and a depth (D) value.

In the present disclosure, the term "depth data" may denote the unobstructed distances between fragments of an object and a given point of origin, along a certain direction. If a fragment of an object is occluded along the direction, its depth data cannot be measured.

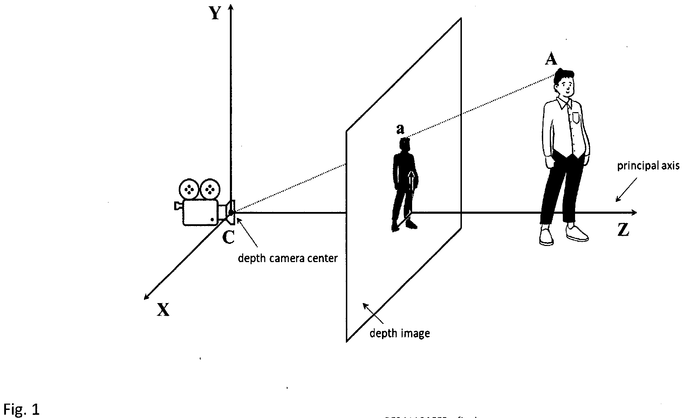

As mentioned above, a depth image may be defined as an image, with each sample associated with a value representing a distance relative to a depth camera, i.e., a depth camera center or a depth camera plane. Fig. 1 illustrates an example of capturing a depth image of a physical environment using a depth camera, assuming an ideal pinhole camera model. The acquired depth data are typically represented as sample intensity values of a 2D grayscale image. The sample locations of this 2D image correspond to discrete points in the captured 3D space, while the intensity values correspond to depth values as measured from the depth camera's viewpoint, e.g., in meters. As is illustrated in Fig. 1, given a point A on the observed real-world geometry and a corresponding sample a in the depth image, the value at a is set equal to the length of **CA** projected onto the principal axis Z, or equivalently the z-coordinate of A relative to the depth camera origin C. There are other distances that may be used to set the value of a, such as the Euclidean distance of **CA**. Yet, most commonly, the z-coordinate convention is used. In other words, Fig. 1 illustrates depth values in a depth image (modified from [1]).

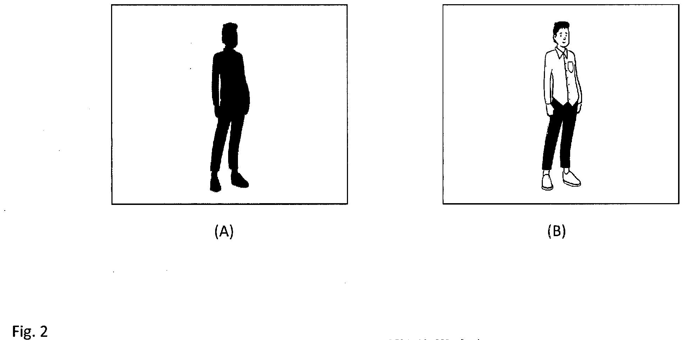

An RGBD image is typically expressed as a combination of a depth image and a color image captured at the same time and depicting the same model, as illustrated in Fig. 2(A) and Fig. 2(B). Fig. 2(A) illustrates a depth image, with each depth value represented as a different shade of grey, and Fig. 2(B) illustrates a color image showing the same model, a person in this example. The resolution, i.e., the number of samples, of depth image might differ from the number of samples of the color image and depends on the depth camera's specification. If depth measurements are acquired over time, they are typically arranged in the form of a video, with each video frame corresponding to the depth measurements at a specific time instance. The measured depth values are typically floating point numbers and are often quantized to limit storage requirements. Different depth cameras make use of different bit-depths in a trade-off between data size and data precision, with 16-bit representations being the most popular. However, in color images the most common sample bit-depth is 8 or 10 bit representation.

Depth data may be obtained in a variety of ways, using either physical or virtual depth cameras, or even may be generated using AI models. Existing methods may be classified based on the nature of the sensors they rely upon, as passive and active.
- Passive methods do not interfere with the scene; they are non-intrusive techniques based on recorded information in the form of 2D images that depict reflected light from the scene.
- Active methods interfere with the scene; they are intrusive techniques based on received energy after an emission of properly formatted light or any other form of electromagnetic energy.

Passive and active methods are not mutually exclusive. In fact, they may be used together to complement each other and lead to denser or more accurate depth measurements, at the expense of more complex designs and more expensive equipment.

Obtaining depth data using AI models may involve learning-based approaches which may be interpreted as a processing step in the depth image generation task, since they typically return depth data based on some input provided to them. Their integration can take place either in physical devices utilizing dedicated processing units or in virtual systems. For example, AI models can be employed to complete partial depth data of a depth image, infer depth data from two or more texture (color) images, or generate complete depth data based on a single texture (color) image, independently of whether the input (i.e., depth or texture images) is obtained from physical sensors or computer-based techniques. AI models are also effective in solving specific tasks in the context of traditional depth acquisition methods, such as the identification of correspondences in stereo vision methods. The exploration of such approaches has been extensive in recent years, with most popular techniques focusing on stereo (see [2]) or monocular (see [3]) depth estimation, requiring a corresponding number of viewpoints as input.

Hereafter, reference is made to depth image generation methods as obtained from physical sensors or by using computer-based techniques. Physical sensors may accommodate either passive or active methods, with computer-based techniques relying on simulations.

### Sensor-based capture

The process of sensing depth in a real scene is also known as range imaging (see [4]) stating:
**"Range imaging** is the name for a collection of techniques that are used to produce a 2D image showing the distance to points in a scene from a specific point, normally associated with some type of sensor device.
The resulting **range image** has pixel values that correspond to the distance. If the sensor that is used to produce the range image is properly calibrated the pixel values can be given directly in physical units, such as meters."

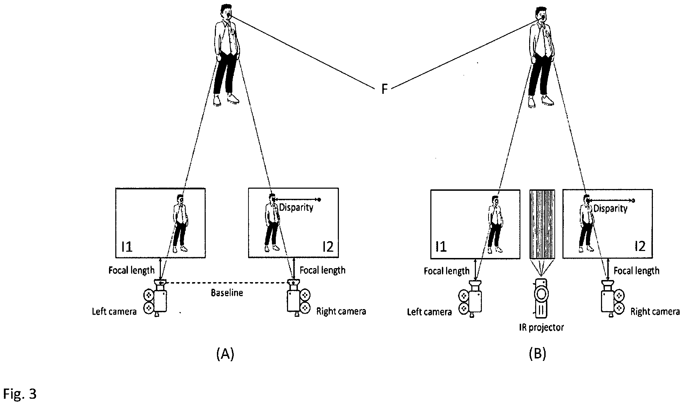

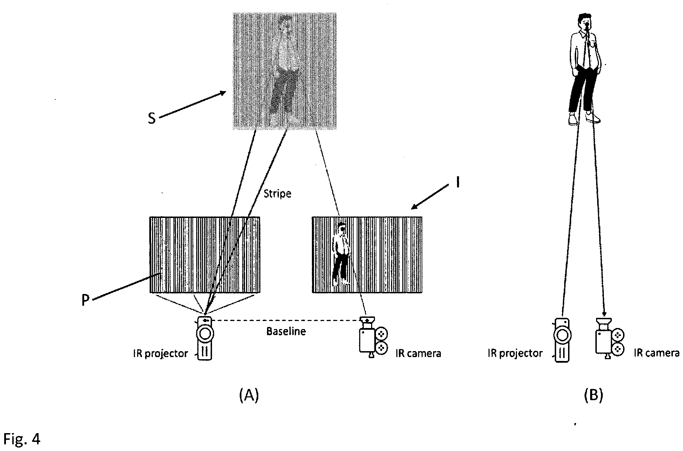

There are different sensors and techniques to generate depth images from a sensed environment. Among the most popular are the (passive/active) stereo vision, motion stereo, structured light, time-of-flight and LiDAR. Each method comes with its own advantages and disadvantages in terms of accuracy, resolution, complexity, cost, as well as sensitivity to environmental conditions and scene characteristics, among others. The working principles of these methods are shown in Fig. 3(A), Fig. 3(B), Fig. 4(A) and Fig. 4(B).

Fig. 3(A) illustrates a passive stereo vision method to generate depth images, and Fig. 3(B) illustrates an active stereo vision methods to generate depth images. Both passive and active stereo vision methods rely on the acquisition of images from at least two viewpoints (left and right camera in Fig. 3(A) and in Fig. 3(B)), resembling the operation of the human visual system. Concretely, feature points (see point F in Fig. 3(A) and Fig. 3(B) - the nose of the person) are identified in the captured images I1 and I2 and matched, thus, establishing correspondences. Triangulation is then applied in order to estimate disparity values, that reflect the amount of shift of pixels from one image to the other, and then can be easily converted to depth measurements. In the active stereo method of Fig. 3(B), an infrared (IR) projector and possibly an IR sensor are additionally included to overcome inabilities of passive stereo methods, e.g. to identify features in texture-less surfaces (e.g., walls) or in low-light environments. Motion stereo relies on the same principles to estimate depth (e.g., correspondence and triangulation), with the main difference of capturing images using the same moving camera from different viewpoints over time.

Fig. 4(A) illustrates a structured light method, and Fig. 4(B) illustrates A time-of-flight (right) method to generate depth images. In structured light methods, a known pattern P is emitted by a projector (e.g. an IR projector in Fig. 4(A)) for illuminating the scene as illustrated at S, a camera (e.g., an IR camera in Fig. 4(A)) captures the scene with the projected pattern as illustrated at I, and the depth is computed based on the deformations of this known pattern P using triangulation. In time-of-flight methods, non-visible short light pulses or light waves are emitted by a projector (e.g. an IR projector in Fig. 4(B)) and detected by a camera (e.g., an IR camera in Fig. 4(B)), with the depth calculated based on the time difference or the phase shift between emitted and detected light. LiDAR sensors follow the same working principle, however, they make use of laser beams and typically focus on larger depth ranges.

Existing depth sensors in the consumer market include, e.g.,
- Microsoft's Azure Kinect which uses the time-of-flight method.
- Intel's RealSense D435 depth camera using the (active) stereo vision method.
- Zed 2i depth camera is shown, using the (passive) stereo vision method.

### Computer-based techniques

It is fairly straightforward to obtain a depth image from a virtual scene, since the environment is fully known and under the control of a 3D rendering engine. Therefore, any physical depth sensor can be simulated by a virtual one, or other techniques that haven't been employed in physical devices may be implemented for obtaining the depth data.

### Coding of Depth data

Depth data may be coded using a certain codec, including video codecs e.g., MPEG video codecs or other video-based codecs.

The MPEG codecs may include the following codecs (see [5]):
- Multiview Video Coding (MVC)
- MVC+D
- MV-HEVC
- 3D-AVC and 3D-HEVC

The video-based codecs encode depth data by making use of image-based or video-based codecs. Most often, these methods rely on colorizing depth data, i.e., transforming them from depth to color space. On one hand, they make use of widely used infrastructure for image and video coding; however, since such methods are not optimized for depth data, their usage often leads to unnatural artifacts. One example is the compression approach implemented by Intel RealSense depth cameras by colorizing depth data (see [6]). Another transformation from depth to color domain is described in [7].

Depth data may also be coded by extending the video-based codecs, thereby obtaining depth codecs that enhance image/video-based codecs by applying some pre/post-processing techniques suitable for depth data. Their advantage is that these methods rely upon widely used infrastructure, while adapting the content for better efficiency. One example is given in [8], which proposes a pre-processing step that considers the noise characteristics of the depth sensor in use. Another example is given in [9] that depends on a post-processing, boundary reconstruction filter that is implemented in-loop.

Depth data may also be coded using decomposition-based codecs. Such depth codecs rely on some form of decomposition (e.g., object segmentation, edge detection, plane detection, tree decomposition, mesh generation) to distinguish between smooth surfaces and abrupt depth changes. Different techniques can then be employed to encode the decomposition, as well as the decomposed regions (e.g., image-based codecs, modeling functions, geometric wavelets, mesh coding).
- An example of this class of codecs is given in [10], and by reshaping the dynamic range, the authors are able to reflect the different importance of different depths, enabling dynamic range allocation. For ROI coding, the JPEG2000 is used driven by an edge detector to avoid artifacts on the edges.
- In [11], an edge detection followed by an image-based compression is proposed, and the results exhibit a noticeable improvement over JPEG 2000 and demonstrate suitability of the proposed compression to image warping applications. The proposed method manages to preserve the depth discontinuities and outperforms state of the art codecs at all rates.
- The proposed algorithm in [12] encodes smooth regions using piecewise-linear functions and the boundaries by line segments, considering characteristics of depth images. A top-down quad-tree decomposition of the image is performed to determine the regions.

Depth data may also be coded using generic-based codecs. Such depth codecs rely on algorithms for a compression of generic type of data (e.g., variable length coding). For the purpose of fast and low complexity compression, Microsoft developed the RVL codec (see [13]). The approach is to consider each depth map as generic data that can be compressed, ignoring the fact that the depth map is an image. Thus, RVL does not consider partitioning blocks (i.e. macro block) to compress the depth image. This method may be extended to accommodate dynamic content (see [14]).

### Packaging of Depth data

Depth data may be packetized using, e.g., the ISO/IEC 14496-12: ISO Base Media File Format (ISBOMFF) or the ISO/IEC 23008-12 Image File Format. The ISOBMFF allows packaging of depth data, assuming that it is coded using a video codec. The depth data is stored in an "auxiliary video track" that is referencing a video track with the main content.

As explained in the ISOBMFF specification (see [15]), this standard's principles are that files are formed as a series of objects, called boxes in this document. All data is contained in boxes; there is no other data within the file. This includes any initial signature required by the specific file format, all object-structured files conformant to Clause 4 (all object-structured files) shall contain a FileTypeBox. Top-level boxes (boxes not contained in other boxes) are indicated as being at 'file' level, with the notation "Container: File".

ISOBMFF allows to store multiple sequences of consecutives samples (audio, video, subtitles, etc.) into the so-called track concept. Tracks are differentiated by their media handler. Regarding the media handler, [15] states:

### "12.1.1 Media handler

Video media uses the 'vide' handler type in the HandlerBox of the MediaBox, as defined in 8.4.3.

Auxiliary video media uses the 'auxv' handler type in the HandlerBox of the MediaBox, as defined in 8.4.3.

An auxiliary video track is coded the same as a video track, but uses this different handler type, and is not intended to be visually displayed (e.g. it contains depth information, or other monochrome or color two-dimensional information). Auxiliary video tracks are usually linked to a video track by an appropriate track reference."

When multiple tracks coexist in the same file structure, it is useful to express their relationship such that the application can process them in the appropriate manner. For instance, two video tracks may be alternative from each other in which case the application should only process and display one of the two at a time. In another scenario, a file structure may contain one primary video (e.g. texture) and an auxiliary video (e.g. a depth map). In this case, it may be implicit that the auxiliary track complements the other video track however, this implicit relationship breaks when there are multiple pairs of video and auxiliary video. For this reason and many others, ISOBMFF provides the ability to link tracks to express a certain relationship. This track-to-track signaling is realized by the track reference concept. Regarding the reference concept, [15] states:

### "8.3.3 Track reference box

### 8.3.3.1 Definition

### Box Type: 'tref' Container: TrackBox Mandatory: No Quantity: Zero or one

This box includes a set of TrackReferenceTypeBoxes, each of which indicates, by its type, that the enclosing track has one of more references of that type. Each reference type shall occur at most once. Within each TrackReferenceTypeBox there is an array of track_IDs; within a given array, a given value shall occur at most once. Other structures in the file formats index through these arrays; index values start at 1.

Exactly one TrackReferenceBox can be contained within the TrackBox.

If this box is not present, the track is not referencing any other track in any way. The reference array is sized to fill the reference type box.

### 8.3.3.2 Syntax

```
 aligned(8) class TrackReferenceBox extends Box('tref') {
          TrackReferenceTypeBox [];
          }
          aligned(8) class TrackReferenceTypeBox (unsigned int(32)
          reference_type) extends Box(reference_type) {
          unsigned int(32) track_IDs[];
          }
          
```

The reference_type shall be set to one of the following values, or a value registered or from a derived specification or registration:
- 'hint' the referenced track(s) contain the original media for this hint track.
- 'cdsc' links a descriptive or metadata track to the content which it describes
- 'font' this track uses fonts carried/defined in the referenced track.
- 'hind' indicates that the referenced track(s) may contain media data required for decoding of the track containing the track reference, i.e., it should only be used if the referenced hint track is used. The referenced tracks shall be hint tracks. The ' hind ' dependency can, for example, be used for indicating the dependencies between hint tracks documenting layered IP multicast over RTP.
- 'vdep' this track contains auxiliary depth video information for the referenced video track.
- 'vplx' this track contains auxiliary parallax video information for the referenced video track.
- 'subt' this track contains subtitle, timed text or overlay graphical information for the referenced track or any track in the alternate group to which the track belongs, if any.
- ' thmb': this track contains thumbnail images for the referenced track. A thumbnail track shall not be linked to another thumbnail track with the 'thmb' item reference.
- 'auxl' : this track contains auxiliary media for the indicated track (e.g. depth map or alpha plane for video).
- 'cdtg': describes the referenced media tracks and track groups collectively; the 'cdtg' track reference shall only be present in timed metadata tracks.
- 'shsc': links a shadow sync track to a main track; see clause 8.6.3

NOTE 1 A track with reference type 'auxl' could have a coding dependency; its use is clarified by specifications that use it.

NOTE 2 When multiple track references would-describe an auxiliary video track, derived specifications might constrain or recommend which track references are used. For example, derived specifications might constrain or recommend whether to use ' vdep' or 'auxl' or both for auxiliary depth video track.

NOTE 3 Other structures index through the array of track references and hence position and order of them can be significant.

NOTE 4 A timed metadata track containing 'cdsc' track reference to a track_group_id value describes each track in the track group individually."

In addition to the media handler and track references, ISOBMFF allows to store metadata defined in ISO/IEC 23002-2 as metadata item in the track. Regarding the metadata, [15] states:

### "8.11.13 Auxiliary video metadata

An auxiliary video track used for depth or parallax information may carry a metadata item of type 'auvd' (auxiliary video descriptor); the data of that item shall be exactly one si_rbsp () as specified in ISO/IEC 23002-3. (Note that si_rbsp () is externally framed, and the length is supplied by the item location information in the file format). There may be more than one of these metadata items (e.g. one for parallax info and one for depth, in the case that the same stream serves)."

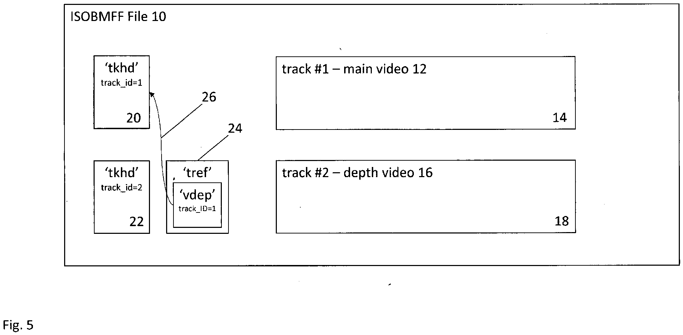

Fig. 5 illustrates an example of a conventional ISOBMFF file 10 including video data and associated depth data. The file 10 contains the main video data 12 of an image or of a scene in a primary or main track 14, and depth data 16 of the image in a secondary or auxiliary track 18. The file 10 includes the track header box 20 (tkhd) indicating that track 14 is the main track, "track_id=1". Further, the file 10 includes the track header box 22 (tkhd) indicating that track 18 is the secondary track, "track_id=2", and the track reference box 24 providing the reference from the secondary track 18 to the main track 14. The track reference box 24 indicates the reference_type as 'vdep' meaning that the track 18 contains auxiliary depth video information for the video 12 referenced using "track_ID=1", as is indicated at 26.

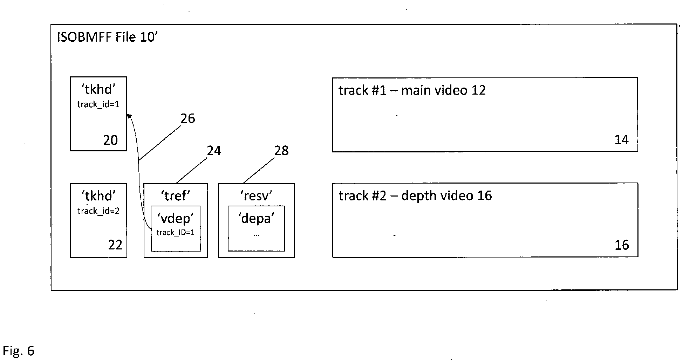

Fig. 6 illustrates another example of a conventional ISOBMFF file 10' including video data and associated depth data. The file 10' corresponds to the file 10 of Fig. 5 but incudes, in addition, the sample entry box 28 (resv) indicating a restricted media track. Such a media track can only be consumed by specific players and requires to be processed before consumption.

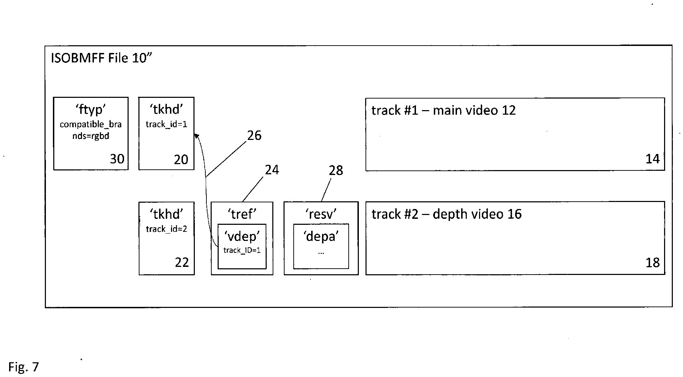

Fig. 7 illustrates yet another example of a conventional ISOBMFF file 10" including video data and associated depth data. The file 10" corresponds to the file 10' of Fig. 6 but incudes, in addition, the file type box 30 (ftyp) for identifying specifications to which file 10" complies. In the depicted example, file 10" complies with RGB, as is specified by compatible_brands=rgb.

In conclusion, ISOBMFF does provide signaling for a track which is an auxiliary track to a primary video track wherein the auxiliary track contains a depth map sequence. However, the properties of the depth track and the alignment between the depth track and the main video track are not signaled by the ISOBMFF box structures. Only the optional inclusion of the metadata from ISO/IEC 23002-3 may complement the description of the depth video track but still with the limits inherent to ISO/IEC 23002-3.

Also, a depth map contained in a track is per definition always an auxiliary track of a main track.

In conventional approaches when handling depth data of an image or a scene the following shortcomings may be observed:
1. The depth data (video and images) encoding bit depth is limited by a maximum bit depth of the format and/or hardware, e.g. a 10bit depth image cannot fit into an 8bit encoder without data loss.
2. The depth data can be accessed only in the time domain, i.e., at a point on a timeline, but not in the space domain, i.e., not at a specific distance.
3. A spatial segmentation of the depth data is based on the 2D visual domain, i.e., it can be split with dimensions in horizontal and vertical axes only, even though there is a third dimension, i.e., the depth.
4. The whole of full range of depth, i.e., from a minimum distance to a maximum distance, is transmitted at any given time.

Embodiments of the present disclosure addresses the above drawbacks or shortcomings by providing an approach which splits a depth range of the depth data into a plurality of depth subranges, and encapsulates the depth data of each of the plurality of depth subranges in separate data structures of a data container. Thus, embodiments of the present disclosure address the problem how to allow a device to consume a source depth content encoded with a bit depth that is higher than the bit depth supported by the device. This is achieved by defining the slices from the source depth content with each slice containing the data from the source depth content that belongs to a sub range corresponding to a distance interval in the source content.

In accordance with embodiments of the present disclosure, a first device, like a producer device, that receives timed depth data, separates the depth data to slices according to their depth values, encodes each slice and encapsulates them in a container along with any associated metadata, thereby allowing each slice to be accessed individually. Further, the first device may also potentially be able to communicate via a network with second device, like an application server/service provider/remote device/ consumer receiving device. The second device, like a consumer receiving device, that reads the metadata, identifies the depth ranges of interest and their respective slices. It then extracts the slices from the container and decodes them.

Embodiments of the present disclosure are advantageous over conventional approaches as they offer, compared to existing or conventional approaches or technologies, one or more of the following benefits:
- An access of depth data only in depth range of interest is enabled.
- A high bit depth data may be decoded by lower bit depth decoders, i.e., a decoder of the bit depth of the individual depth ranges is sufficient.
- In case of receiving raw depth data to be encoded, the encoding quality is improved since intra prediction algorithms will only consider the regions of a frame where data is present.

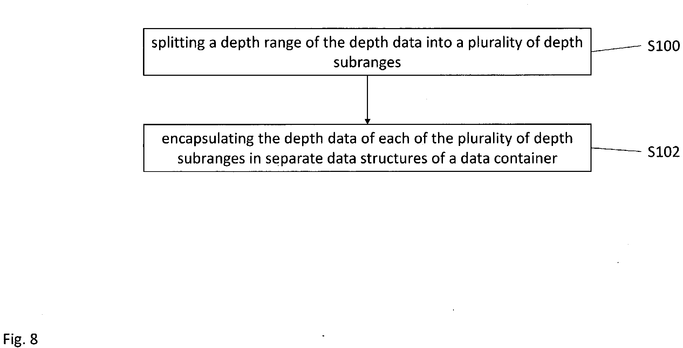

Fig. 8 illustrates a flow diagram of an embodiment of a method of processing depth data of an image. The method includes the following:
Step S100: Splitting a depth range of the depth data into a plurality of depth subranges.
Step S102: Encapsulating the depth data of each of the plurality of depth subranges in separate data structures of a data container, e.g., separate tracks of an ISOBMFF file.

In accordance with embodiments, the depth data may be referred to as timed depth data. Timed depth data means that the depth data consists of a series of depth images (also known as depth frames) with each depth frame being assigned on a specific time point on a timeline. It is also called a depth video and is the depth equivalent of a (color) video. Thus, embodiments of the present disclosure apply to timed depth data (i.e. depth video) of a set depth range. Taking as input the depth data, each depth frame, also referred to as a depth image, of the series of images is separated into depth frames of a subrange, i.e., a range shorter than the original or full depth range, with the corresponding depth points being assigned to the respective sub-range. The value of each point is also accordingly adjusted to the subrange.

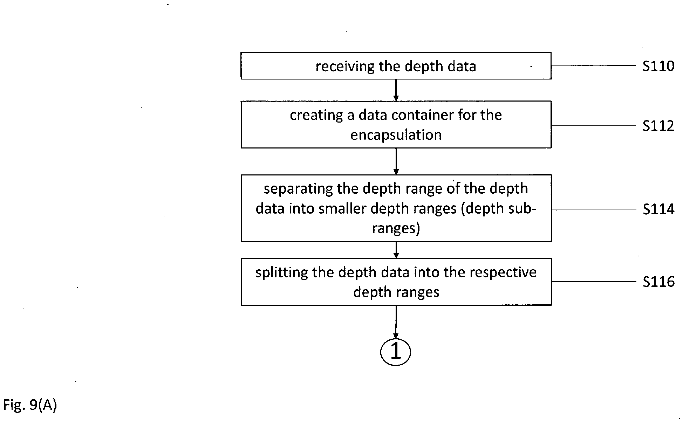

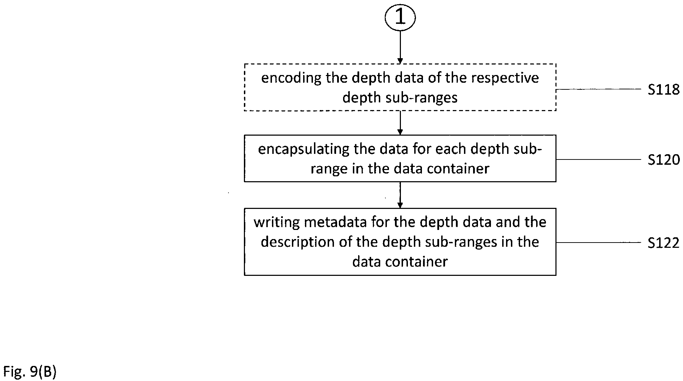

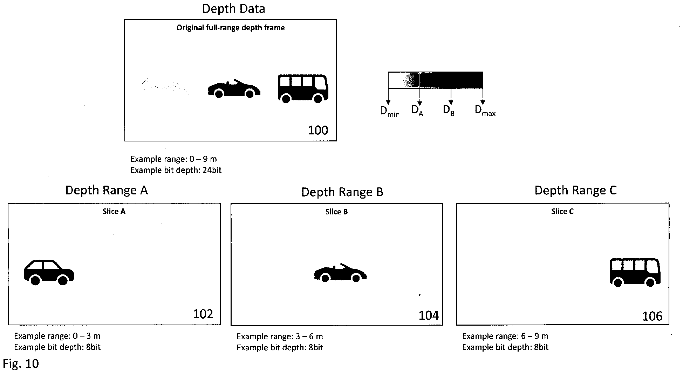

Fig. 9 illustrates a flow diagram of a method of producing encapsulated depth data into a data container in accordance with embodiments of the present disclosure. The method is described with reference to Fig. 10 illustrating the splitting of an original full-range depth frame 100 into three sub-range depth frames or slices 102, 104, 106. The data container may be a file (e.g. an ISOBMFF file) or another container. The method includes: Step S110: Receiving the depth data. In accordance with embodiments, the depth data may be encoded. In accordance with other embodiments, the depth data may not be encoded (also referred to as raw depth data). The depth data may be in the form of an original full-range depth frame 100 as illustrated in Fig. 10. The full-range depth frame 100 defines depth data representing depth values indicating distances in the image or scene relative to a certain point or to a certain plane. In the depicted image or scene three vehicles are depicted, a small car on the left, a sprots car in the center and a bus on the right. The full-range depth frame 100 represents distances or depth values between 0m to 9m, which may be coded with a bit depth of 24 bits.
Step S112: Creating a data container for the encapsulation, e.g. an ISOBMFF file.
Step S114: Separating the full depth range of the depth data into smaller depth ranges, also referred to as depth sub-ranges. As illustrated in Fig. 10, the full depth range from Dₘᵢₙ to Dₘₐₓ is separated into three depth ranges or slices A, B and C. Depth range A is from Dₘᵢₙ to D_{A}, depth range B is from D_{A} to D_{B}, and depth range C is from D_{B} to Dₘₐₓ.
Step S116: Splitting the depth data into the respective depth ranges, also referred to as depth sub-ranges or slices. As illustrated in Fig. 10. The full-range depth frame 100 is separated into the sub-range depth frames or slices 102, 104, 106. The sub-range depth frame 102 represents distances or depth values between 0m to 3m, which may be coded with a bit depth of 8 bits. Assuming the small car being closest to the certain point or plane, sub-range depth frame 102 only contains depth values for the small car. The sub-range depth frame 104 represents distances or depth values between 3m to 6m, which may be coded with a bit depth of 8 bits. Assuming the sports car being in mid-range from the certain point or plane, sub-range depth frame 104 only contains depth values for the sports car. The sub-range depth frame 106 represents distances or depth values between 6m to 9m, which may be coded with a bit depth of 8 bits. Assuming the bus being farthest from the certain point or plane, subrange depth frame 106 only contains depth values for the bus. As may be seen, the data in the sub-range depth frame 102 to 106 may be coded with a reduced bit depth when compared to the bit depth of the full-range depth frame 100, thereby allowing the high bit depth data in the full-range depth frame 100 to be decoded by lower bit depth decoders, i.e., a decoder of the bit depth of the individual depth ranges is sufficient.
Step S118: Optionally, if the received raw depth data is to be encoded, encoding the depth data of the respective depth sub-ranges.
Step S120: Encapsulating the data for each depth sub-range in the container, e.g., one track (data structure) per depth sub range in a ISOBMFF file or data container.
Step S122: Writing metadata for the depth data and the description of the depth sub-ranges in the encapsulated data. Timed metadata may be written into a timed structure, e.g., into a metadata track in accordance with the ISOBMFF, and untimed metadata may be written into a non-timed structure, e.g., into a file or track header.

The sub-range depth frames or slices may be described or defined in several ways:
(1) By indicating the minimum/near depth value and maximum/far depth value of the slice, e.g., that a slice contains values from 1 meter to 3 meters, like slice A in Fig. 10.
(2) By indicating the minimum/near depth value and the depth/length of the slice, e.g., that a slice contain values starting at 1 meter and extends from the starting value by 2 more meters towards higher depth values.
(3) By indicating the maximum/far depth value and the depth/length of the slice, e.g., that a slice contain values starting at 9 meters and extends from the starting value by 2 more meters towards lower depth values.
(4) By indicating the center of the slice and the depth/length of the slice, e.g., that a slice has a center at 2 meters and extends from the center by 1 meter towards lower and higher depth values.
In the following description of embodiments, convention (1) is used, namely defining the near/min and far/max values of a slice.

In accordance with embodiments, a bitstream containing the depth data is packaged in a media container, such as a media container according to the ISO Base Media File Format (ISOBMFF). The bitstream may be placed in a track or in a similar structure (data structure), and other metadata or information may be stored in a track header, in a configuration file, or in another structure or file suitable for carrying the metadata. When using the ISOBMFF as example file format a media handler such as 'dept' described below, or 'auxv' described in [15], and a track header such as 'dmhd' described below are assumed.

### X Media-specific definitions

### X.1 Depth media

### X.1.1 Media handler

Depth media uses the 'dept' handler type in the HandlerBox of the MediaBox, as defined in 8.4.3. Multiple depth tracks may be present in the file.

### X.1.2 Media header

### X.1.2.1 Definition

Box Types: 'dmhd'
Container: MediaInformationBox
Mandatory: Yes
Quantity: Exactly one

Depth tracks use the DepthMediaHeaderBox in the MedialnformationBox as defined in 8.4.5. The DepthMediaHeaderBox contains general presentation information, independent of the coding, for depth media. Note that the flags field has the value 1.

### X.1.2.2 Syntax

```
 aligned(8) class DepthMediaHeaderBox
      extends FullBox('dmhd', version = 0, 1) {
      unsigned int(16) width;
      unsigned int(16) height;
      unsigned int(16) near_plane;
      unsigned int(16) far_plane;
      unsigned int(1) is_inverse;
      unsigned int(1) is_normalised;
      unsigned int(1) is_linear;
      unsigned int(8) units;
      unsigned int(1) is_slice;
      unsigned int(7) reserved;
      }
```

### X.1.2.3 Semantics

version is an integer that specifies the version of this box
width and height are the maximum depth width and height of the stream described by this sample entry, in elementary units. The default value of 0 indicates that the depth is not expressed in a matrix-like format.
near_plane and far_plane are the values of the near and far plane respectively. The default value of 0 indicates that the planes are not set.
is_inverse indicates whether the depth is represented with inversed values. The default value of 0 indicates that the values are not inversed.
is_normalised indicates whether the depth values are normalized in the range 0 to 1. The default value of 0 indicates that the values are not normalised.
is_linear indicates the depth values are linearly distributed between the minimum and maximum values
units the value of depth data units, defined as following:
   0: no units
   1: the values are in meters
   2: the values are in millimetres
   3-255: reserved
is_slice is equal to 0 to indicate the full depth range track, and is_slice is equal to 1 to indicate a sub-range depth slice track. When there are two or more tracks with the same value of track_group_id, there shall be at most one with the value of is_slice set to 0.

In accordance with embodiments, the depth data of the full depth range is stored in a track and the depth date of each depth subrange is stored in a separate track. The depth subrange tracks are identified by indicating that they belong to the same track group. Using the ISOBMFF as an example, the grouping can be achieved by extending the current grouping mechanisms as follows:

### 1.1.1 Track group box

### 1.1.1.1 Definition

| | |
|---|---|
| Box Type: | 'trgr' |
| Container: | TrackBox |
| Mandatory: | No |
| Quantity: | Zero or one |

This box enables the indication of groups of tracks, where all tracks in a group share a particular characteristic or the tracks within a group have a particular relationship. The box contains zero or more boxes, and the particular characteristic or the relationship is indicated by the box type of the contained boxes. The contained boxes include an identifier, which can be used to conclude the tracks belonging to the same track group. The tracks that contain the same type of a contained box within the TrackGroupBox and have the same identifier value within these contained boxes belong to the same track group.

Track groups shall not be used to indicate dependency relationships between tracks. Instead, the TrackReferenceBox is used for such purposes.

Boxes derived from TrackGroupTypeBox shall have version equal to 0 unless defined otherwise for the value of track_group_type.

(flags & 1) equal to 1 in a TrackGroupTypeBox of a. particular track_group_type indicates that the track_group_id in that TrackGroupTypeBox is not equal to any track_ID value and is not equal to the track_group_id of any other TrackGroupTypeBox with a different track_group_type. When (flags & 1) is equal to 1 in a TrackGroupTypeBox with particular values of track_group_type and track_group_id, (flags & 1) shall be equal to 1 in all TrackGroupTypeBoxes of the same values of track_group_type and track_group_id, respectively.

Any values of flags such as (flags & 0x000FFE) is not equal to 0 are reserved. The values of flags shall be such that (flags & 0xFFF000) is equal to 0 unless defined otherwise for the value of track_group_type.

### 1.1.1.2 Syntax

```
 aligned(8) class TrackGroupBox extends Box('trgr')
 {
   Box boxes[];
   }
   aligned(8) class TrackGroupTypeBox(unsigned int(32)
   track_group_type)
   extends FullBox(track_group_type, version, flags)
   {
   unsigned int(32) track_group_id;
   // the remaining data may be specified
   II for a particular track_group_type
   }
```

### 1.1.1.3 Semantics

boxes is an array of boxes that shall derive from TrackGroupTypeBox or FreeSpaceBox.
track_group_type indicates the track grouping type and shall be set to one of the following values, or a value registered, or a value from a derived specification or registration:
   'msrc' indicates that this track belongs to a multi-source presentation. Specified in 8.3.4.4.1 of [23].
   ' ster' indicates that this track is either the left or right view of a stereo pair suitable for playback on a stereoscopic display. Specified in 8.3.4.4.2 of [23].
   'depg' indicates that this track is belongs to a depth range group, and is either the full depth range or a slice containing a sub-range. Specified in 1.1.1.4.1 below.

The pair of track_group_id and track_group_type identifies a track group. The tracks that contain a particular TrackGroupTypeBox having the same value of track_group_id and track_group_type belong to the same track group.

### 1.1.1.4 Track group definitions

### 1.1.1.4.1 Depth range group

### 1.1.1.4.1.1 Definition

TrackGroupTypeBox with track_group_type equal to 'depg' indicates that this track is either the full depth range or a sub-range depth slice.

The tracks that have the same value of track_group_id within DepthRangeGroupBox form a depth range and its individual sub-ranges.

### 1.1.1.4.1.2 Syntax

```
 aligned(8) class DepthRangeGroupBox extends
 TrackGroupTypeBox('depg')
 {
   unsigned int(1) is_slice;
   bit(31) reserved;
   }
```

### 1.1.1.4.1.3 Semantics

is_slice equal to 0 indicates the full depth range track, and is_slice equal to 1 indicates a sub-range depth slice track. When there are two or more tracks with the same value of track_group_id, there shall be at most one with the value of is_slice set to 0.

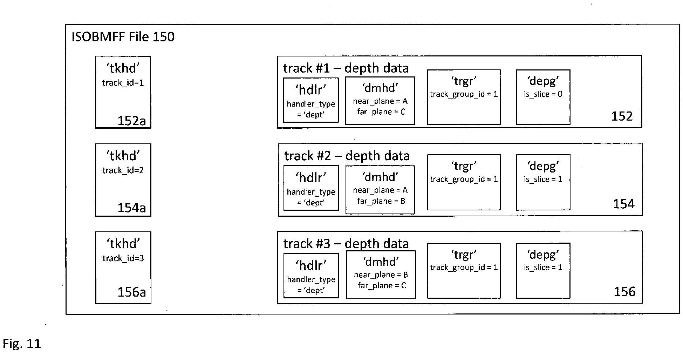

Fig. 11 illustrates the encapsulation of depth data into a data container in accordance with an embodiment of the present disclosure. Fig. 11 represents an ISOBMFF container or file 150 (data container) with three tracks 152, 154, 156 (data structures). The first track 152 (track_ID = 1 in the the track header box 'tkhd' 152a, first data structure) contains depth data ranging from value A to value C (where A<B<C) as indicated in the box 'dmhd', e.g., covers a full depth range. The second track 154 (track_ID = 2 in the the track header box 'tkhd' 154a, second data structure) contains depth data ranging from value A to value B as indicated in the box 'dmhd' and is indicated to be a depth sub-range or a slice by having the flag is_slice in 'depg' set to 1. Similarly, the third track 156 (track_ID = 3 in the the track header box 'tkhd' 156a, second data structure) contains depth data ranging from value B to value C as indicated in the box 'dmhd' and is indicated to be a depth sub-range or a slice by having the flag is_slice in 'depg' set to 1. The depth sub-range tracks 154, 156 are associated with the full depth range track 152 via the track id in 'trgr', track_group_id = 1. If the depth data of the second and third tracks 154 and 156 are combined, the effective range of the depth data will be the same as in track 152.

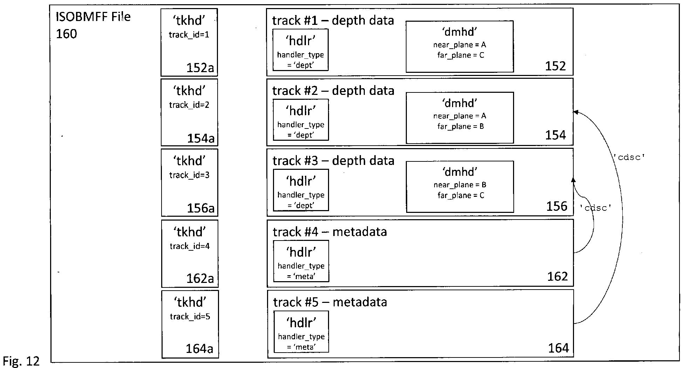

Fig. 12 illustrates the encapsulation of depth data into a data container in accordance with another embodiment of the present disclosure. A bitstream containing the depth data is packaged in a media container, such as a media container according to the ISO Base Media File Format (ISOBMFF). The bitstream may be placed in a track or in a similar structure, and other metadata or information may be stored in a track header, in a configuration file, or in another structure or file suitable for carrying the metadata. Each depth range, the full depth range and the depth sub-ranges or slices, is stored in a separate track. Additionally, there is a timed metadata track (of type 'meta' ) that contains information about the slices and is associated with a ' cdsc' reference. Fig. 12 represents an ISOBMFF container 160 with three tracks 152, 154 and 156 (first and second data structures). Similar to Fig. 11, the first track 152 (track_ID = 1 in the the track header box 'tkhd' 152a) contains depth data ranging from value A to value C (where A<B<C) as indicated in the box 'dmhd', e.g., covers a full depth range. The second track 154 (track_ID = 2 in the the track header box "tkhd" 154a) contains depth data ranging from value A to value B as indicated in the box 'dmhd', and the third track 156 (track_ID = 3 in the the track header box 'tkhd' 156a) contains depth data ranging from value B to value C as indicated in the box 'dmhd'. Information such as if a track is a slice or even the near and far values are contained in respective metadata tracks 162 164 (track_IDs = 4 or 5 in the the respective track header boxes 162a, 164a, third data structures) that are referencing, via the 'cdsc' reference, the track containing the depth data. If the depth data of the second and third tracks 154 and 156 are combined, the effective range of the depth data will be the same as in track 152.

In accordance with embodiments of the present disclosure, both track groups and metadata tracks may be used. The metadata track of Fig. 12, instead of containing information and referencing a track, may contain information and reference a group and its tracks. This embodiment is advantageous in cases where certain properties such as the slice depth, i.e., the near and far planes, are changing over time since timed metadata are used.

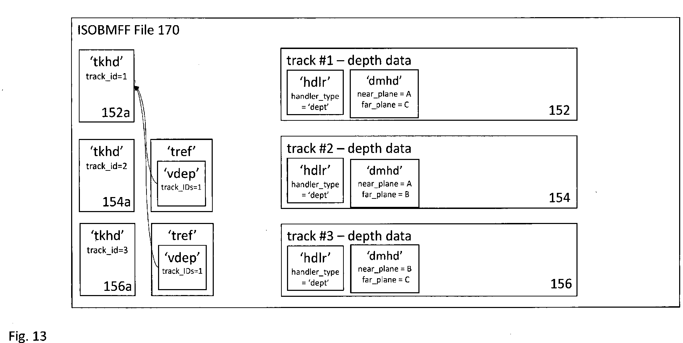

Fig. 13 illustrates the encapsulation of depth data into a data container in accordance with yet another embodiment of the present disclosure. Other than in the embodiments of Fig. 11 to Fig. 12 where the depth sub-range tracks are associated with the full depth range track via the track_group_id or the ' cds c' reference, the tracks are associated using track references. Fig. 13 represents an ISOBMFF container or file 170 with three tracks 152, 154, 156. The first track 152 (track_ID = 1 in the the track header box 'tkhd' 152a) contains depth data ranging from value A to value C (where A<B<C) as indicated in the box 'dmhd', e.g., covers a full depth range. The second track 154 (track_ID = 2 in the the track header box 'tkhd' 154a) contains depth data ranging from value A to value B as indicated in the box 'dmhd'. The third track 156 (track_ID = 3 in the the track header box 'tkhd' 156a) contains depth data ranging from value B to value C as indicated in the box 'dmhd'. The depth sub-range tracks 154, 156 are associated with the full depth range track 152 using track references `tref . . The depth sub-range tracks or slices 154, 156 reference to the full depth range or main track 152 and the type of reference indicates the relationship. In the illustration below the reference_type vdep is used. In accordance with other embodiments, another reference_type may be used, e.g., auxv.

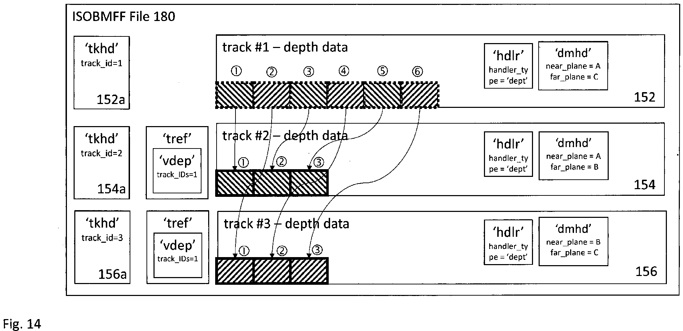

Fig. 14 illustrates the encapsulation of depth data into a data container in accordance with a further embodiment of the present disclosure. Other than in the embodiments of Fig. 11 to Fig. 13 where the depth data of the full depth range is encapsulated explicitly in a track, the full depth range data is represented with references to the depth subranges data i.e., the full depth range track only includes a reference to the depth data in the depth sub-ranges. As is illustrated, each of the depth sub-range is stored in separate tracks 154 and 156 (track_ID = 2 and 3 in the the track header box 'tkhd' 154a, 156a), and the full depth range or main track 152 (track_ID = 1 in the the track header box 'tkhd' 152a) contains references to the depth sub-range tracks 154, 156. Assuming the main track 152 and the two depth sub-range tracks 154 and 156, a first sample or depth value ① of the main track 152 references a first sample or depth value ① of the first depth sub-range track 154, a second sample or depth value ② of the main track 152 references a first sample ① of the second depth sub-range track 156, a third sample or depth value ③ of the main track 152 references a second sample ② of the first depth sub-range track 154, a fourth sample or depth value ④ of the main track 152 references a second sample ② of the second depth sub-range track 156, a fifth sample or depth value ⑤ of the main track 152 references a third sample or depth value ③ of the first depth sub-range track 154, and a sixth sample or depth value ⑥ of the main track 152 references a third sample or depth value ③ of the second depth sub-range track 156.

In accordance with embodiments, the implementation of Fig. 14 may be based on Network Abstraction Layer (NAL) Units and uses aggregator tracks, see [20] that hold pointers to locations of samples that combined build a NAL unit. In accordance with embodiments, the implementation of Fig. 14 may be preferred for non-NAL unit-based approaches, e.g., image-based coding, where merging of the samples happens on a content level, e.g., fill the "black" areas of an image, and not on a bitstream level.

In the embodiments described so far, the two or more depth sub-ranges or slices do not overlap, e.g., all depth values are contained only in one sub-range. However, the present disclosure is not limited to such embodiments. In accordance with other embodiments some depth values may be contained in two or more subs-ranges. Stated differently, the depth sub-ranges or slices may be overlapping.

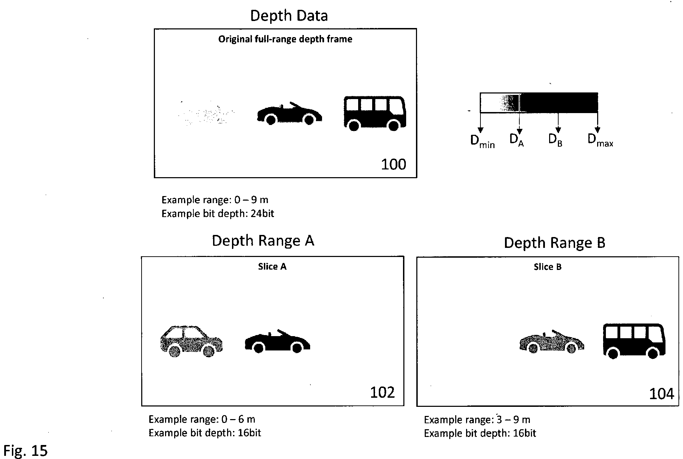

Fig. 15 illustrates a splitting of an original full-range depth frame into two partially overlapping sub-range depth frames or slices in accordance with embodiments of the present disclosure. A 24bit depth video may be split into two 16 bit videos with an overlap. As is illustrated, the full-range depth frame 100 is separated into the sub-range depth frames or slices 102, 104. The sub-range depth frame 102 represents distances or depth values between 0m to 6m, which may be coded with a bit depth of 16 bits. Assuming the small car being closest and the sports car being in mid-range to the certain point or plane, sub-range depth frame 102 only contains depth values for the small car and for the sports car. The sub-range depth frame 104 represents distances or depth values between 3m to 9m, which may be coded with a bit depth of 16 bits. Assuming the sports car being in mid-range and the bus being farthest from the certain point or plane, sub-range depth frame 104 only contains depth values for the sports car and for the bus. As may be seen, the data in the subrange depth frames 102, 104may be coded with a reduced bit depth when compared to the bit depth of the full-range depth frame 100, thereby allowing the high bit depth data in the full-range depth frame 100 to be decoded by lower bit depth decoders, i.e., a decoder of the bit depth of the individual depth ranges is sufficient.

In accordance with embodiments, the depth sub-ranges or slices may have boundaries that change over time. This may be used depending on the scenario, e.g. for providing a slice that tracks a certain object in the image or scene.

In accordance with embodiments, the depth data is stored in the bitstream according to the values sequentially and the depth sub-ranges or slices are indexes to the bitstream locations, e.g., for the depth values for the depth sub-range or slice A in Fig. 10 or Fig. 15, an index DA to a first memory location MemA, at which the depth date is stored, may be included in the slice or track instead of the actual depth value or depth data. Likewise, for the depth values for the depth sub-range or slice B in Fig. 10 or Fig. 15, an index DB to a second memory location MemB, at which the depth date is stored, may be included in the slice or track instead of the actual depth value or depth data. This embodiment enables arbitrary slice sizes, since the client may can select any depth value as the start and the end of the slice, e.g., slice Sa starts at DA until DB, slice Sb starts at DA until DC, etc..

In accordance with embodiments, the data container or file is separated in smaller segments/parts to be ready for delivery over the network (e.g. CMAF, DASH).

In accordance with embodiments, the data container is a network packetized stream (e.g. RTP stream).

In accordance with embodiments, a depth stream may be encoded using a nonimage-based (including video) codec. The result is a binary stream of coded depth data or depth information. Potential metadata for decoding the depth stream may be encapsulated alongside the depth data.

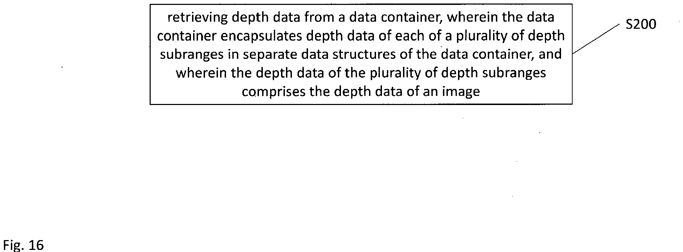

Fig. 16 illustrates a flow diagram of an embodiment of a method of processing depth data of an image, more specifically of retrieving depth data from a data container. The method includes the following:
S200: Retrieving the depth data from a data container, wherein the data container encapsulates depth data of each of a plurality of depth subranges in separate data structures of the data container, and wherein the depth data of the plurality of depth subranges comprises the depth data of the image.

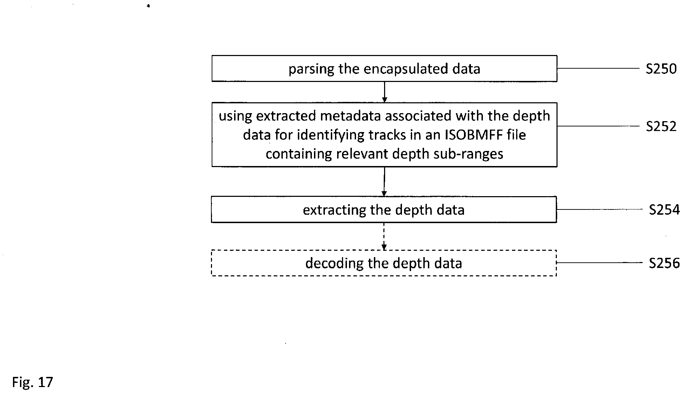

Fig. 17 illustrates a flow diagram of an embodiment of a method of retrieving depth data which has been encapsulated into a data container in accordance with embodiments of the present disclosure. The data container may be file (e.g. an ISOBMFF file) or other container. The method includes:
Step S250: Parsing the encapsulated data.
Step S252: Using extracted metadata associated with the depth data for identifying the locations, e.g. tracks in a file of the ISOBMFF, containing relevant depth sub-ranges.
Step S254: Extracting the depth data.
Step S256: Optionally, decoding the depth data.

In the embodiments described so far, the depth data of the full range and the depth data of each of the plurality of depth subranges are encapsulated in the same data container. However, the present disclosure is not limited to such embodiments. In accordance with other embodiments, only the plurality of depth subranges are encapsulated in the data container, and the depth data of the full range may not be used, e.g., stored or transmitted. In with other embodiments, the depth data of the full range may be used, e.g., stored or transmitted, however, it may be treated or processed separately from the depth data of the plurality of depth subranges. For example, the depth data of the full range may be encapsulated in a data container which is different and/or separate from the data container into which the depth data of each of the plurality of depth subranges are encapsulated.

### Further embodiments

So far, the inventive concept has been described with reference to aspects and embodiments concerning methods of processing depth data. In accordance with further embodiments, the present disclosure also provides an apparatus of processing depth data, which may be part of or include a packager of an extractor for packaging depth data into/extracting depth data from a data container, e.g., by a method according to the previously described embodiments.

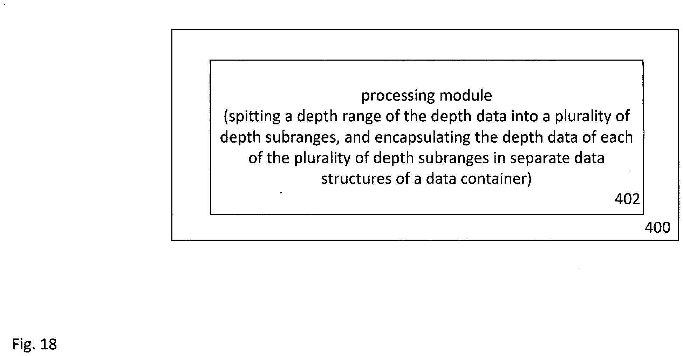

Fig. 18 illustrates a block diagram of an apparatus of processing depth data of an image in accordance with embodiments of the present disclosure. The apparatus 400 includes the following modules:
402: A data processing module configured to operate in accordance with embodiments of the present disclosure for splitting a depth range of the depth data into a plurality of depth subranges, and encapsulating the depth data of each of the plurality of depth subranges in separate data structures of a data container.

In accordance with embodiments of the present disclosure the apparatus may be part of or may include a packager for packaging the data container, which encapsulates the depth data and, optionally, or second data associated with the image, like image or video data, into a data stream, e.g., a bitstream.

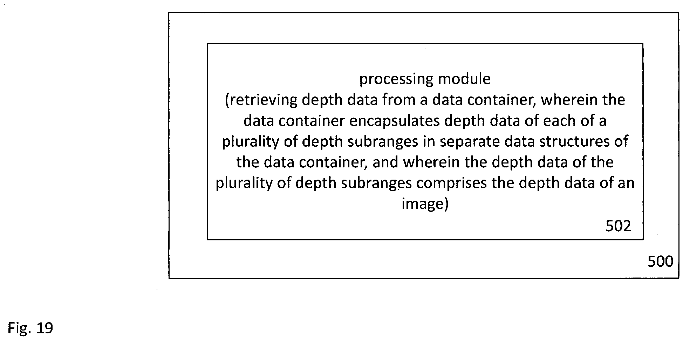

Fig. 19 illustrates a block diagram of an apparatus of processing depth data of an image in accordance with further embodiments of the present disclosure. The apparatus 500 includes the following modules:
502: A data processing module configured to operate in accordance with embodiments of the present disclosure for retrieving the depth data from a data container, wherein the data container encapsulates depth data of each of a plurality of depth subranges in separate data structures of the data container, and wherein the depth data of the plurality of depth subranges comprises the depth data of the image. The depth data may be packaged or encapsulated into the data container by a method according to the previously described embodiments.

In accordance with embodiments of the present disclosure the apparatus may be part of or may include an extractor for extracting the depth data and, optionally, second data associated with the image, like image or video data from a data container included/encoded in a data stream, e.g., a from bitstream.

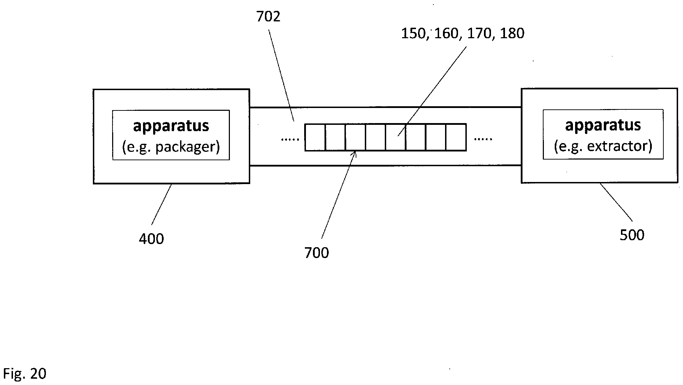

Fig. 20 illustrates a data stream 700 in accordance with embodiments of the present disclosure, which has packaged thereinto a data container encapsulating depth data of an image in accordance with embodiments of the present disclosure. For example, the data stream 700 includes a data container, e.g., one or more of the data containers 150, 160, 170 or 180 described above with reference to Fig. 11, Fig. 12, Fig. 13, Fig. 14, which is provided by the apparatus 400, e.g., by a packager, that performs the inventive method for encapsulating the depth data. The data stream 700 is transmitted via a wired or wireless transmission medium 702, like cable or a radio link, to the apparatus 500, e.g., to an extractor, that performs the inventive method for retrieving from the data container 100 the encapsulated depth data.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

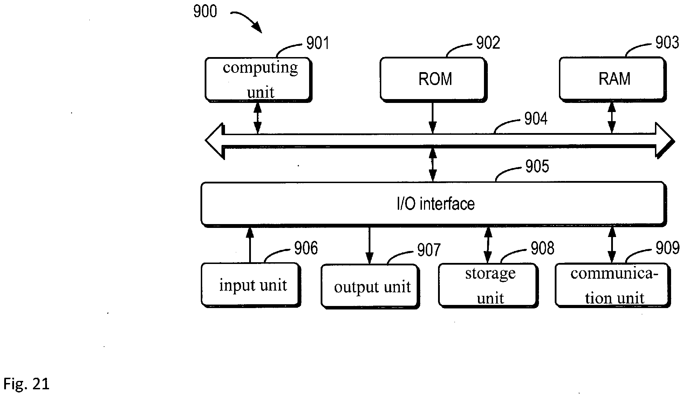

Fig. 21 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method of processing depth data of an image, the method comprising:
splitting a depth range of the depth data into a plurality of depth subranges, and
encapsulating the depth data of each of the plurality of depth subranges in separate data structures of a data container.
A 2^{nd} embodiment provides the method of the 1^{st} embodiment, wherein
the depth data of the depth range is encapsulated in a first data container, and the depth data of the plurality of depth subranges is encapsulated in a second data container, the first and second data containers being separate data containers, or
the depth data of the depth range is encapsulated in a first data structure of the data container, and the depth data of the plurality of depth subranges is encapsulated in respective second data structures of the data container, wherein the first and second data structures are separate data structures of the data container.
A 3^{rd} embodiment provides the method of the 2^{nd} embodiment, wherein the depth data of the depth range is encapsulated in the first data structure of the data container by including into the first data structure
- depth values for the depth range, or
- a reference to depth values in the second data structures.
A 4^{th} embodiment provides the method of the 2^{nd} embodiment, wherein
the depth data of the depth range is encapsulated in the first data structure of the data container by sequentially including into the first data structure depth values for the depth range, and
the depth data of a depth subrange is encapsulated in the second data structure of the data container by including into the second data structure
   - depth values for the depth subrange, or
   - a reference to depth values in the first data structure.
A 5^{th} embodiment provides the method of any one of the preceding embodiments, wherein the second data structures are associated with the first data structure using
- a group identifier, wherein the a group identifier identifies a group to which the first and second data structures belong to, or
- a reference to the first data structure.
A 6^{th} embodiment provides the method of any one of the preceding embodiments, further comprising: writing information about the first and/or second data structures in
- the data container, e.g., into a header of the data container or into a header of the first and/or second data structures of the data container, or into respective third data structures which are associated with the first and/or second data structures, or
- a file which is separate from the data container, e.g., into a configuration file associated with the data container.
A 7^{th} embodiment provides the method of the 6^{th} embodiment, wherein the information about the first and/or second data structures comprises one or more of the following:
- information about the data structure being a first data structure or a second data structure,
- information about an association of the second data structures with the first data structure, e.g., the group identifier or the reference to the first data structure,
- information about a group including the depth data of the depth range and the plurality of depth subranges and about the first and second data structures associated with the group.
An 8^{th} embodiment provides the method of any one of the preceding embodiments, wherein the plurality of depth subranges comprises two or more of partially overlapping depth subranges.
A 9^{th} embodiment provides the method of any one of the preceding embodiments, wherein boundaries of one or more or all of the plurality of depth subranges change over time.
A 10^{th} embodiment provides the method of any one of the preceding embodiments, wherein the boundaries of one or more or all of the plurality of depth subranges are changed responsive to a change of a location of an object in the image.
An 11^{th} embodiment provides the method of any one of the preceding embodiments, wherein boundaries of one or more or all of the plurality of depth subranges are fixed.
A 12^{th} embodiment provides the method of any one of the preceding embodiments, wherein the data container is separated in a plurality of segments or parts for delivery over the network using, e.g., a Common Media Application Format, CMAF, or Dynamic Adaptive Streaming over HTTP, DASH.
A 13^{th} embodiment provides the method of any one of the preceding embodiments, wherein the data container is packetized for delivery over the network using a network packetized stream. e.g. a Real-Time Transport Protocol, RTP, stream.
A 14^{th} embodiment provides the method of any one of the preceding embodiment, further comprising: transmitting the data container over a network, e.g., to one or more for the following:
- an application server,
- a service provider,
- a remote device.
A 15^{th} embodiment provides the method of any one of the preceding embodiments, wherein the depth values represent distances in the image relative to a certain point or to a certain plane.
A 16^{th} embodiment provides the method of any one of the preceding embodiments, wherein the depth data is represented by
- a frame, each sample/pixel of the frame being associated with a depth value, or
- a depth image of the image, each sample/pixel of the depth image being associated with a depth value, or
- a matrix of samples, each sample of matrix being associated with a depth value.
A 17^{th} embodiment provides the method of any one of the preceding embodiments, wherein the depth data is uncoded or uncompressed, wherein the depth data may be represented using one or more of the following:
- a binary format, e.g., as a binary stream or as a bit stream,
- a structured text format, e.g., Comma Separated Values, CSV, or Extensible Markup Language, XML, or JavaScript Object Notation, JSON,
- an uncoded or uncompressed video format,
- one or more uncoded or uncompressed images.
An 18^{th} embodiment provides the method of any one of the 1^{st} to 16^{th} embodiments, wherein the depth data is coded or compressed, wherein the depth data may be coded or compressed using one or more of the following:
- a codec for video, e.g., Advanced Video Coding, AVC, or High Efficiency Video Coding, HEVC, or Versatile Video Coding, VVC, or AOMedia Video 1, AV1,
- a codec for images, e.g., Joint Photographic Experts Group, JPEG, or Portable Network Graphics, PNG,
- a codec for depth data, e.g., Run length encoding and Variable Length encoding, RVL.
A 19^{th} embodiment provides the method of any one of the preceding embodiments, wherein the image comprises one or more of the following:
- a real scene, wherein the depth data is obtained using, e.g., physical or virtual depth cameras and/or artificial intelligence, AI, models,
- a virtual scene, wherein the depth data is obtained, e.g., using computer-based techniques, like a 3D rendering engine.
A 20^{th} embodiment provides the method of the 19^{th} embodiment, wherein the depth data from the real scene is obtained using
- a passive method using recorded information in the form of 2D images that depict reflected light from the scene, and/or
- an active method using received energy after an emission of electromagnetic energy, like properly formatted light.
A 21^{st} embodiment provides the method of any one of the preceding embodiments, wherein the method comprises:
- receiving the depth data,
- creating the data container,
- separating the depth range of the depth data into the depth subranges,
- splitting the depth data into the respective depth subranges,
- encapsulating the depth data by writing the depth data for each depth subrange into the data container, wherein the depth data is written into the data container in a timed structure, e.g., in the form of one track per depth subrange according to the ISO Base Media File Format, ISOBMFF, and
- writing metadata on the depth data and a description of the ranges in the data container, wherein timed metadata is written into a timed structure, e.g., a metadata track in accordance with the ISO Base Media File Format, ISOBMFF, and wherein untimed metadata is written into a non-timed structure, e.g. data container header, like a track or file header.
A 22^{nd} embodiment provides the method of the 21^{st} embodiment, further comprising: encoding the depth data of the depth subranges.
A 23^{rd} embodiment provides the method of any one of the preceding embodiments, wherein the data container is a structure having a format supporting carriage of structured timed data, e.g., a file according to an ISO Base Media File Format, ISOBMFF, or a main picture according to an ISO/IEC 23008-12 Image File Format.
A 24^{th} embodiment provides the method of any one of the preceding embodiments, wherein the data container is a file according to the ISO Base Media File Format, ISOBMFF, and wherein the data structures are respective tracks of the file.
A 25^{th} embodiment provides a method of processing depth data of an image, the method comprising:
retrieving the depth data from a data container, wherein the data container encapsulates depth data of each of a plurality of depth subranges in separate data structures of the data container, and wherein the depth data of the plurality of depth subranges comprises the depth data of the image.
A 26^{th} embodiment provides the method of the 25^{th} embodiment, wherein the depth data is encapsulated in the data container according to the method of any one of the 1^{st} to 24^{th} embodiments.
A 27^{th} embodiment provides the method of the 25^{th} or 26^{th} embodiment, wherein retrieving the depth data from the data container comprises:
- receiving the data container, e.g., a file according to the ISO Base Media File Format, ISOBMFF,
- parsing data encapsulated in the data container,
- extracting metadata from the data encapsulated in the data container,
- using the extracted metadata for identifying a location containing relevant depth subranges, and
- extracting the depth data for the identified depth subranges.
A 28^{th} embodiment provides the method of the 27^{th} embodiment, wherein retrieving the depth data from the data container further comprises: decoding the depth data.
A 29^{th} embodiment provides the method of any one of the preceding embodiments, wherein the data container is a file according to the ISO Base Media File Format, ISOBMFF, and comprises a MediaBox containing the depth data, the MediaBox using a 'dept' handler type in the HandlerBox,
wherein a depth media header is defined as follows:

| | |
|---|---|
| Box Types: | ' dmhd' |
| Container: | MediaInformationBox |
| Mandatory: | Yes |
| Quantity: | Exactly one, |

wherein a syntax of the depth media header is as follows:

```
aligned(8) class DepthMediaHeaderBox
      extends FullBox('dmhd', version = 0, 1) {
      unsigned int(16) width;
      unsigned int(16) height;
      unsigned int(16) near_plane;
      unsigned int(16) far_plane;
      unsigned int(1) is_inverse;
      unsigned int(1) is_normalised;
      unsigned int(1) is_linear;
      unsigned int(8) units;
      unsigned int(1) is_slice;
      unsigned int(7) reserved;
      }
```

with:
version is an integer that specifies the version of this box,
width and height are the maximum depth width and height of the stream described by this sample entry, in elementary units, wherein the default value of 0 indicates that the depth is not expressed in a matrix-like format,
near_plane and far_plane are the values of the near and far plane respectively, wherein the default value of 0 indicates that the planes are not set,
is_inverse indicates whether the depth is represented with inversed values, wherein the default value of 0 indicates that the values are not inversed,
is_normalised indicates whether the depth values are normalized in the range 0 to 1, wherein the default value of 0 indicates that the values are not normalized,
is_linear indicates the depth values are linearly distributed between the minimum and maximum values.
units the value of depth data units, defined as following:
   0: no units,
   1: the values are in meters,
   2: the values are in millimeters,
   3-255: reserved,
is_slice is equal to 0 to indicate the depth range track, and is_slice is equal to 1 to indicate a sub-range depth slice track, wherein, when there are two or more tracks with the same value of track_group_id, there shall be at most one with the value of is_slice set to 0.
A 30^{th} embodiment provides the method of the 29^{th} embodiment, wherein the file comprises a depth range group DepthRangeGroupBox having the following syntax:

```
aligned(8) class DepthRangeGroupBox extends
 TrackGroupTypeBox('depg')
 {
   unsigned int(1) is_slice;
   bit(31) reserved;
   }
```

with
is_slice equal to 0 indicates the depth range track, and is_slice equal to 1 indicates a sub-range depth slice track, wherein, when there are two or more tracks with the same value of track_group_id, there shall be at most one with the value of is_slice set to 0.
A 31^{st} embodiment provides a non-transitory computer-readable storage medium comprising instructions which, when executed by a computer, cause the computer to carry out the method of any one of the preceding embodiments.
A 32^{nd} embodiment provides an apparatus of processing depth data of an image, the apparatus comprising:
a data processing module for splitting a depth range of the depth data into a plurality of depth subranges, and encapsulating the depth data of each of the plurality of depth subranges in separate data structures of a data container.
A 33^{rd} embodiment provides an apparatus of processing depth data of an image, the apparatus comprising:
a data processing module for retrieving the depth data from a data container, wherein the data container encapsulates depth data of each of a plurality of depth subranges in separate data structures of the data container.
A 34^{th} embodiment provides a data container encapsulating depth data of an image, wherein depth data of each of a plurality of depth subranges is encapsulated in separate data structures of the data container.
A 35^{th} embodiment provides the data container of the 34^{th} embodiment, wherein the data container is a file according to the ISO Base Media File Format, ISOBMFF, and comprises a MediaBox containing the depth data, the MediaBox using a ' dept' handler type in the HandlerBox,
wherein a depth media header is defined as follows:

| | |
|---|---|
| Box Types: | 'dmhd' |
| Container: | MediaInformationBox |
| Mandatory: | Yes |
| Quantity: | Exactly one, |

wherein a syntax of the depth media header is as follows:

```
 aligned(8) class DepthMediaHeaderBox
      extends FullBox('dmhd', version = 0, 1) {
      unsigned int(16) width;
      unsigned int(16) height;
      unsigned int(16) near_plane;
      unsigned int(16) far_plane;
      unsigned int(1) is_inverse;
      unsigned int(1) is_normalised;
      unsigned int(1) is_linear;
      unsigned int(8) units;
      unsigned int(1) is_slice;
      unsigned int(7) reserved;
      }
```

with:
version is an integer that specifies the version of this box,
width and height are the maximum depth width and height of the stream described by this sample entry, in elementary units, wherein the default value of 0 indicates that the depth is not expressed in a matrix-like format,
near_plane and far_plane are the values of the near and far plane respectively, wherein the default value of 0 indicates that the planes are not set,
is_inverse indicates whether the depth is represented with inversed values, wherein the default value of 0 indicates that the values are not inversed,
is_normalised indicates whether the depth values are normalized in the range 0 to 1, wherein the default value of 0 indicates that the values are not normalized,
is_linear indicates the depth values are linearly distributed between the minimum and maximum values.
units the value of depth data units, defined as following:
   0: no units,
   1: the values are in meters,
   2: the values are in millimeters,
   3-255: reserved,
is_slice is equal to 0 to indicate the depth range track, and is_slice is equal to 1 to indicate a sub-range depth slice track, wherein, when there are two or more tracks with the same value of track_group_id, there shall be at most one with the value of is_slice set to 0.
A 36^{th} embodiment provides the data container of the 35^{th} embodiment, wherein the file comprises a depth range group DepthRangeGroupBox having the following syntax:

```
 aligned(8) class DepthRangeGroupBox extends
 TrackGroupTypeBox('depg')
 {
   unsigned int(1) is_slice;
   bit(31) reserved;
   }
```

with
is_slice equal to 0 indicates the depth range track, and is_slice equal to 1 indicates a sub-range depth slice track, wherein, when there are two or more tracks with the same value of track_group_id, there shall be at most one with the value of is_slice set to 0.
A 37^{th} embodiment provides the data container of any one of the 34^{th} to 36^{th} embodiments, wherein the depth data is encapsulated in the data container according to the method of any one of the 1^{st} to 30^{th} embodiments.
A 38^{th} embodiment provides a data stream having encoded thereinto data on an image, wherein the data stream comprises:
   a data container encapsulating depth data of the image, wherein depth data of each of a plurality of depth subranges is encapsulated in separate data structures of the data container.
A 39^{th} embodiment provides the data stream of the 38^{th} embodiment, wherein the depth data is encapsulated in the data container according to the method of any one of the 1^{st} to 30^{th} embodiments.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### Abbreviations

- AOM: Alliance for Open Media
- AV1: AOMedia Video 1
- AVC: ISO/IEC 14496-10 Advanced Video Coding (AVC) / ITU-T Rec. H.264
- CVS: Coded Video Sequence
- ISOBMFF: ISO/IEC 14496-12 ISO Base Media File Format
- H.265: ITU's name of HEVC
- HEVC: ISO/IEC 23008-2 High Efficiency Video Coding (HEVC) / ITU-T Rec. H.265
- MPEG: Moving Picture Experts Group
- MVC: Multiview Video Coding [refers to ISO/IEC 14496-10 when the techniques in Annex H (Multiview Video Coding) are in use]
- MVC+D: Multiview Video Coding Plus Depth [refers to ISO/IEC 14496-10 when the techniques in Annex I (Multiview and Depth Video Coding) are in use]
- MV-HEVC: Multiview High Efficiency Video Coding [refers to ISO/IEC 23008-2 when the techniques in Annex G (Multiview High Efficiency Video Coding) are in use]
- MVD: Multiview Video Coding Plus Depth [refers to ISO/IEC 14496-10 when the techniques in Annex I (Multiview and Depth Video Coding) or Annex J (Multiview and Depth Video with Enhanced Non-Base View Coding) are in use]
- RGB: Red Green Blue (color space)
- SEI: Supplemental Enhancement Information
- VVC: ISO/IEC 23090-3 Versatile Video Coding (VVC) / ITU-T Rec. H.266
- VSEI: Versatile Supplemental Enhancement Information messages for coded video bitstreams / ITU-T Rec H.274

### References

[1] ARCore, https://developers.google.com/ar/develop/java/depth/developer-guide
[2] Fehn, Christoph. "A 3D-TV approach using depth-image-based rendering (DIBR)." In Proc. of VIIP, vol. 3, no. 3. 2003
[3] Sun, Wenxiu, Lingfeng Xu, Oscar C. Au, Sung Him Chui, and Chun Wing Kwok. "An overview of free view-point depth-image-based rendering (DIBR)." In APSIPA Annual Summit and Conference, pp. 1023-1030. 2010
[4] Wikipedia contributors, "Range imaging," Wikipedia, The Free Encyclopedia, https://en.wikipedia.org/w/index.php?title=Range_imaging&oldid=1050828429
[5] Chen, Ying, and Anthony Vetro. "Next-generation 3D formats with depth map support." IEEE MultiMedia 21, no. 2 (2014): 90-94
[6] Depth image compression by colorization for Intel RealSense Depth Cameras, https://dev.intelrealsense.com/docs/depth-image-compression-by-colorization-for-intel-realsense-depth-cameras
[7] Pece, F., Kautz, J., Weyrich, T.: Adapting standard video codecs for depth streaming. In: Proceedings of EGVE-JVRC 2011, pp. 59-66, Aire-la-Ville, Switzerland. Eurographics Association (2011)
[8] J. Fu, D. Miao, W. Yu, S. Wang, Y. Lu and S. Li, "Kinect-Like Depth Data Compression," in IEEE Transactions on Multimedia, vol. 15, no. 6, pp. 1340-1352, Oct. 2013, doi: 10.1109/TMM.2013.2247584.
[9] Oh, K.J., Yea, S., Vetro, A. and Ho, Y.S., 2009. Depth reconstruction filter for depth coding. Electronics letters, 45(6), pp.305-306.
[10] R. Krishnamurthy, Bing-Bing Chai, Hai Tao and S. Sethuraman, "Compression and transmission of depth maps for image-based rendering," Proceedings 2001 International Conference on Image Processing (Cat. No.01CH37205), Thessaloniki, Greece, 2001, pp. 828-831 vol.3, doi: 10.1109/ICIP.2001.958248
[11] Zanuttigh P, Cortelazzo GM. Compression of depth information for 3D rendering. In2009 3DTV Conference: The True Vision-Capture, Transmission and Display of 3D Video 2009 May 4 (pp. 1-4). IEEE.
[12] Morvan, Y. and Farin, D., 2005, June. Novel coding technique for depth images using quadtree decomposition and plane approximation. In Visual Communications and Image Processing 2005 (Vol. 5960, pp. 1187-1194). SPIE.
[13] Wilson, A.D., 2017, October. Fast lossless depth image compression. In Proceedings of the 2017 ACM International Conference on Interactive Surfaces and Spaces (pp. 100-105).
[14] Jun, H. and Bailenson, J., 2020, March. Temporal rvl: a depth stream compression method. In 2020 IEEE conference on virtual reality and 3D user interfaces abstracts and workshops (VRW) (pp. 664-665). IEEE.
[15] ISO/IEC 14496-12 "Information technology - Coding of audio-visual objects - Part 12: ISO base media file format"
[16] ISO/IEC 23008-12 Information technology - High efficiency coding and media delivery in heterogeneous environments - Part 12: Image File Format
[17] ISO/IEC 23009-1 Dynamic adaptive streaming over HTTP (DASH) - Part 1: Media presentation description and segment formats, https://standards.iso.org/ittf/PubliclyAvailableStandards/c083314_ISO_IEC%202 3009-1_2022(en).zip
[18] ISO/IEC 15938-17:2022 Information technology - Multimedia content description interface - Part 17: Compression of neural networks for multimedia content description and analysis. https://www.iso.org/standard/78480.html
[19] ISO/IEC 23001 17 "Information technology - MPEG Systems technologies - Part17: Uncompressed video and images in ISO Base Media File Format"
[21] Overview of ISO Base Media File Format. https://mpeg.chiariglione.org/standards/mpeg-4/iso-base-media-file-format/overview-iso-base-media-file-format (Slides - start here: https://mpeg.chiariglione.org/sites/default/files/files/standards/parts/docs/N18093 _ISOFF%28TS%29.pptx)
[20] ISO/IEC 14496-15 "Information technology - Coding of audio-visual objects - Part 15: Carriage of network abstraction layer (NAL) unit structured video in the ISO base media file format" https://www.iso.org/standard/83336.html
[21] RTP: A Transport Protocol for Real-Time Applications https://www.rfc-editor.org/rfc/rfc3550
[22] RFC 3984. RTP Payload Format for H.264 Video. https://www.ietf.org/rfc/rfc3984.txt
[23] FDIS Text of ISO/IEC 14496-12:2024 "Information technology - Coding of audio-visual objects - Part 12: ISO base media file format"
[24] RFC 4566. SDP: Session Description Protocol. https://datatracker.ietf.org/doc/html/rfc4566

## Claims

1. A method of processing depth data of an image, the method comprising:
splitting a depth range of the depth data into a plurality of depth subranges, and
encapsulating the depth data of each of the plurality of depth subranges in separate data structures of a data container.

2. The method of claim 1, wherein
the depth data of the depth range is encapsulated in a first data container, and the depth data of the plurality of depth subranges is encapsulated in a second data container, the first and second data containers being separate data containers, or
the depth data of the depth range is encapsulated in a first data structure of the data container, and the depth data of the plurality of depth subranges is encapsulated in respective second data structures of the data container, wherein the first and second data structures are separate data structures of the data container.

3. The method of claim 2, wherein
the depth data of the depth range is encapsulated in the first data structure of the data container by including into the first data structure
- depth values for the depth range, or
- a reference to depth values in the second data structures,
or
the depth data of the depth range is encapsulated in the first data structure of the data container by sequentially including into the first data structure depth values for the depth range, and the depth data of a depth subrange is encapsulated in the second data structure of the data container by including into the second data structure
- depth values for the depth subrange, or
- a reference to depth values in the first data structure.

4. The method of any one of the preceding claims, wherein the second data structures are associated with the first data structure using
- a group identifier, wherein the a group identifier identifies a group to which the first and second data structures belong to, or
- a reference to the first data structure.

5. The method of any one of the preceding claims, further comprising:
writing information about the first and/or second data structures in
- the data container, e.g., into a header of the data container or into a header of the first and/or second data structures of the data container, or into respective third data structures which are associated with the first and/or second data structures, or
- a file which is separate from the data container, e.g., into a configuration file associated with the data container, and
wherein the information about the first and/or second data structures comprises one or more of the following:
- information about the data structure being a first data structure or a second data structure,
- information about an association of the second data structures with the first data structure, e.g., the group identifier or the reference to the first data structure,
- information about a group including the depth data of the depth range and the plurality of depth subranges and about the first and second data structures associated with the group.

6. The method of any one of the preceding claims, wherein
the plurality of depth subranges comprises two or more of partially overlapping depth subranges, and/or
boundaries of one or more or all of the plurality of depth subranges change over time.

7. The method of any one of the preceding claims, wherein
the data container is separated in a plurality of segments or parts for delivery over the network using, e.g., a Common Media Application Format, CMAF, or Dynamic Adaptive Streaming over HTTP, DASH, or
the data container is packetized for delivery over the network using a network packetized stream. e.g. a Real-Time Transport Protocol, RTP, stream.

8. The method of any one of the preceding claims, wherein the encapsulating the depth data of each of the plurality of depth subranges in separate data structures of a data container comprises:
- encapsulating the depth data by writing the depth data for each depth subrange into the data container, wherein the depth data is written into the data container in a timed structure, e.g., in the form of one track per depth subrange according to the ISO Base Media File Format, ISOBMFF, and
- writing metadata on the depth data and a description of the ranges in the data container, wherein timed metadata is written into a timed structure, e.g., a metadata track in accordance with the ISO Base Media File Format, ISOBMFF, and wherein untimed metadata is written into a non-timed structure, e.g. data container header, like a track or file header.

9. The method of any one of the preceding claims, wherein the data container is a file according to the ISO Base Media File Format, ISOBMFF, and wherein the data structures are respective tracks of the file.

10. A method of processing depth data of an image, the method comprising:
retrieving the depth data from a data container, wherein the data container encapsulates depth data of each of a plurality of depth subranges in separate data structures of the data container, and wherein the depth data of the plurality of depth subranges comprises the depth data of the image.

11. The method of claim 10, wherein retrieving the depth data from the data container comprises:
- receiving the data container, e.g., a file according to the ISO Base Media File Format, ISOBMFF,
- parsing data encapsulated in the data container,
- extracting metadata from the data encapsulated in the data container,
- using the extracted metadata for identifying a location containing relevant depth subranges, and
- extracting the depth data for the identified depth subranges.

12. A non-transitory computer-readable storage medium comprising instructions which, when executed by a computer, cause the computer to carry out the method of any one of the preceding claims.

13. An apparatus of processing depth data of an image, the apparatus comprising:
a data processing module for
- splitting a depth range of the depth data into a plurality of depth subranges, and encapsulating the depth data of each of the plurality of depth subranges in separate data structures of a data container, or
- retrieving the depth data from a data container, wherein the data container encapsulates depth data of each of a plurality of depth subranges in separate data structures of the data container.

14. A data container encapsulating depth data of an image, wherein depth data of each of a plurality of depth subranges is encapsulated in separate data structures of the data container.

15. A data stream having encoded thereinto data on an image, wherein the data stream comprises:
a data container encapsulating depth data of the image, wherein depth data of each of a plurality of depth subranges is encapsulated in separate data structures of the data container.
